# EUROPEAN PATENT APPLICATION

(11) **EP 2 258 958 A2**
(43) Date of publication of application: **08.12.2010**
(21) Application number: 10164700.6
(22) Date of filing: 02.06.2010
(51) Int. Cl.: F16D 9/02, F16D 9/06, F16D 27/112

(54) **Electromagnetic clutch**

(30) Priority: 04.06.2009 JP 2009135427
(71) Applicant: KABUSHIKI KAISHA TOYOTA JIDOSHOKKI, Kariya-shi, Aichi-ken 448-8671 (JP)
(72) Inventor: Ota, Masaki, Kariya-shi Aichi 448-8671 (JP); Kawaguchi, Masahiro, Kariya-shi Aichi 448-8671 (JP); Hoshino, Nobuaki, Kariya-shi Aichi 448-8671 (JP); Tarutani, Tomoji, Kariya-shi Aichi 448-8671 (JP); Onishi, Toru, Kariya-shi Aichi 448-8671 (JP)
(74) Representative: TBK-Patent

(57) **Abstract**

An electromagnetic clutch (30) includes an external drive source (E), a driven apparatus (10) having a rotary shaft, a power transmission path, first and second rotating parts, a power source, an electromagnetic coil (36) and a power cutoff mechanism. A power transmission path is formed between the external drive source and the driven apparatus, and in which the first and the second rotating parts, the electromagnetic coil and the power cutoff mechanism are disposed. The first rotating part (8) is driven to rotate by power from the external drive source (E). The second rotating part (33,34) is mounted on the rotary shaft for rotation therewith. The electromagnetic coil is energized by electric current from the power source to generate electromagnetic attraction force by which the first and the second rotating parts are connected for transmitting power therebetween. The power cutoff mechanism (33C) stops excessive power transmission from the external drive source to the driven apparatus when the electromagnetic coil is energized.

## Description

### BACKGROUND OF THE INVENTION

The present invention relates to an electromagnetic clutch which can transmit power from an external drive source to a driven apparatus.

In a driven apparatus, such as a compressor, which is driven by power from a vehicle engine serving as an external drive source through a belt, an electromagnetic clutch having an electromagnetic coil is used for transmitting the power to the driven apparatus. When the electromagnetic coil of the electromagnetic clutch is energized by electric current supplied from a battery, a first rotating part provided on the side of the vehicle engine and driven to rotate by the vehicle engine is connected to a second rotating part provided on the side of the compressor and rotatable integrally with the rotary shaft of the compressor. When the electromagnetic coil is de-energized, the electromagnetic clutch is disengaged thereby to disconnect the first rotating part and the second rotating part from each other. Thus, the power transmission from the vehicle engine to the compressor is stopped. The electromagnetic clutch disclosed, for example, in the Japanese Patent Application Publication 57-51025, is operable to be disengaged so as to disconnect the first and the second rotating parts when excessive frictional heat is generated due to the slippage between the first and the second rotating parts.

In the electromagnetic clutch disclosed in the above Publication, a thermal fuse is connected in series to the electromagnetic coil. The thermal fuse is disposed on the side of the electromagnetic coil that is adjacent to the friction surfaces of the first rotating part (input rotating part) and the second rotating part (friction plate). If any abnormality, such as deadlock, occur in the compressor and the transmission torque to the compressor is increased excessively, causing slippage between the friction surfaces of the first and the second rotating parts, excessive heat generated on the friction surfaces causes the thermal fuse to be blown out, with the result that the electromagnetic coil is de-energized thereby to disconnect the first and the second rotating parts from each other.

In this case, in order to prevent belt slippage, the connection between the first and second rotating parts is required to be released, rapidly. In the above-described compressor having the electromagnetic clutch, however, it takes a long time before the thermal fuse is blown out after the generation of excessive heat at the friction surfaces of the first and the second rotating parts. Thus, rapid releasing of the connection cannot be accomplished.

The above problem is also encountered in the case of releasing the connection between a rotating part on the side of any drive source and another rotating part on the side of the rotary shaft that is rotatable integrally with a rotary shaft of any auxiliary device of vehicle such as a supercharger operable by power from vehicle engine.

The present invention is directed to providing an electromagnetic clutch which can release rapidly the connection between a first rotating part provided on the side of a drive source and a second rotating part provided on the side of a rotary shaft of any driven apparatus in the event of any abnormality causing excessive transmission torque to the driven apparatus.

### SUMMARY OF THE INVENTION

In accordance with the present invention, an electromagnetic clutch is provided on a power transmission path between an external drive source and a driven apparatus. The electromagnetic clutch includes a first rotating part, a second rotating part and an electromagnetic coil. The first rotating part is disposed in the power transmission path and driven to rotate by power from the external drive source. The second rotating part is disposed in the power transmission path and mounted on a rotary shaft of the driven apparatus for rotation with the rotary shaft of the driven apparatus. The electromagnetic coil is energized by electric current supplied from a power source to generate electromagnetic attraction force by which the first rotating part and the second rotating part are connected to each other for transmitting power between the first rotating part and the second rotating part. A power cutoff mechanism is disposed in the power transmission path for stopping excessive power transmission from the external drive source to the driven apparatus when the electromagnetic coil is energized.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a longitudinal sectional view showing a compressor having an electromagnetic clutch according to a first preferred embodiment of the present invention;
Fig. 2 is a schematic front view showing a hub of the compressor of Fig. 1; and
Fig. 3 is an enlarged longitudinal sectional view showing an electromagnetic coil of the compressor of Fig. 1, together with its related parts.

### DETAILED DESCRIPTION OF THE PREFERRED EMBODIMENTS

The following will describe an electromagnetic clutch for a swash plate type variable displacement compressor serving as a driven apparatus driven by power from a vehicle engine serving as an external drive source.

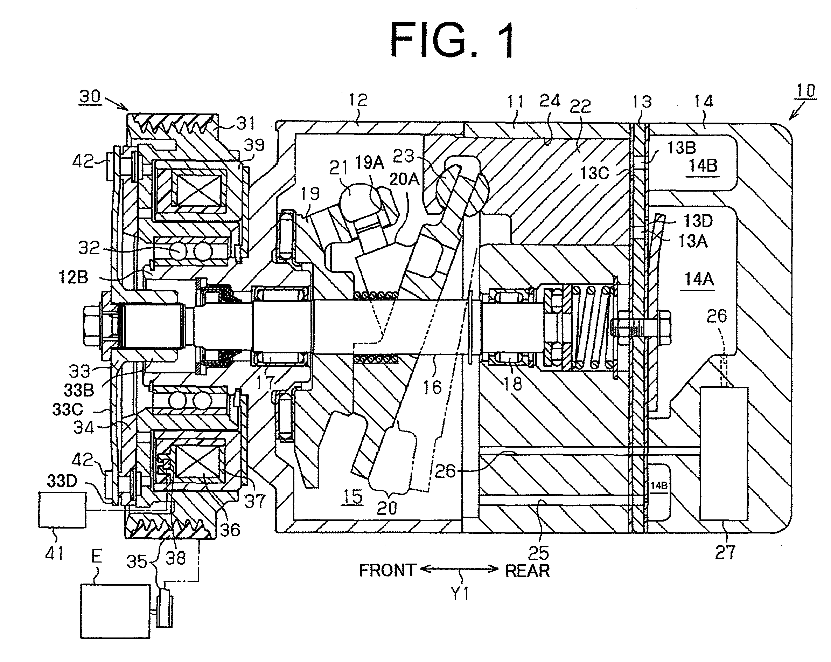

Referring to Fig. 1 showing a swash plate type variable displacement compressor 10 (hereinafter simply referred to as "compressor"), the front and the rear of the compressor 10 are indicated by the arrow Y1. The compressor 10 includes a cylinder block 11, a front housing 12 and a rear housing 14. The front housing 12 is fixedly connected to the front end of the cylinder block 11, and the rear housing 14 is fixedly connected to the rear end of the cylinder block 11 through a valve plate assembly 13. The cylinder block 11 and the front housing 12 define a crank chamber 15 therebetween. A rotary shaft 16 is rotatably supported by the front housing 12 and the cylinder block 11 at the center thereof.

A rotary shaft 16 is rotatably supported by the front housing 12 at the front thereof through a roller bearing 17 and by the cylinder block 11 at the rear thereof through a roller bearing 18. The front end of the rotary shaft 16 extends outside the front housing 12 and is connected to a vehicle engine E through an electromagnetic clutch 30.

In the crank chamber 15, a lug plate 19 is fixedly mounted on the rotary shaft 16 on the rear side of the roller bearing 17 for rotation with the rotary shaft 16. A swash plate 20 is mounted on the rotary shaft 16 on the rear side of the lug plate 19 so as to be inclinable with respect to the rotary shaft 16 and slidable in the axial direction of the rotary shaft 16. The swash plate 20 has a connecting portion 20A extending therefrom and having at the distal end thereof a guide pins 21. The guide pin 21 is engaged with a guide hole 19A formed in the lug plate 19. Thus, the swash plate 20 is rotatable integrally with the lug plate 19. A plurality of cylinder bores 24 is formed through the cylinder block 11 around the rotary shaft 16. Pistons 22 are received reciprocably movably in the respective cylinder bores 24 and connected to the swash plate 20 through shoes 23. As the swash plate 20 rotates with rotation of the rotary shaft 16, the pistons 22 are reciprocated in the respective cylinder bores 24.

A discharge chamber 14A is formed in the rear housing 14 at the center thereof and connected to an external refrigerant circuit through an outlet (not shown). An annular cylindrical suction chamber 14B is formed in the outer periphery of the rear housing 14 and connected to the external refrigerant circuit through an inlet (not shown). Suction ports 13B, suction valves 13C, discharge ports 13A and discharge valves 13D are formed in the valve plate assembly 13. Each cylinder bore 24 is communicable with the suction chamber 14B through the suction port 13B and the suction valve 13C and the discharge chamber 14A through the discharge port 13A and the discharge valve 13D.

Refrigerant gas is drawn from the suction chamber 14B into the cylinder bore 24 by reciprocating motion of the piston 22 together with rotation of the rotary shaft 16, and the refrigerant gas is compressed and then discharged into the discharge chamber 14A.

A bleed passage 25 is formed through the cylinder block 11 to provide fluid communication between the crank chamber 15 and the suction chamber 14B. A supply passage 26 is formed through the cylinder block 11 and a rear housing 14 to provide fluid communication between the discharge chamber 14A and the crank chamber 15. A displacement control valve 27 is disposed in the supply passage 26 for controlling flow rate of high-pressured refrigerant gas flowing from the discharge chamber 14A into the crank chamber 15 through the supply passage 26. The pressure of the crank chamber 15 is changed depending on the relation between such flow rate of refrigerant gas flowing through the supply passage 26 and the flow rate of refrigerant gas flowing from the crank chamber 15 into the suction chamber 14B through the bleed passage 25. Therefore, the pressure difference between the crank chamber 15 and the cylinder bore 24 through the piston 22 is changed, so that the inclination angle of the swash plate 20 is changed thereby to adjust the displacement of the compressor.

The following will describe the electromagnetic clutch 30. A pulley 31 serving as a first rotating part on the side of the drive source is rotatably supported through an angular bearing 32 by a boss 12B forming the front projection end of the front housing 12. The pulley 31 is connected to the vehicle engine E through a belt 35 which is wound around the pulley 31. Thus, the pulley 31 is rotated by power supplied directly from the vehicle engine E. A hub 33 is fixed to the front end of the rotary shaft 16 extending out of the front housing 12.

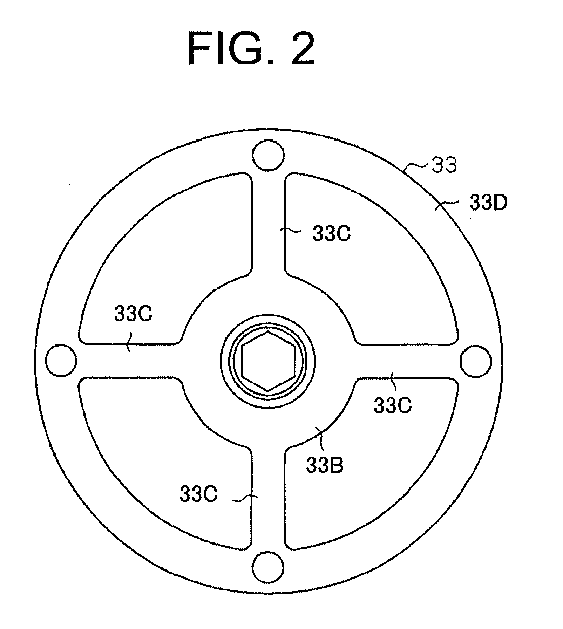

As shown in Figs. 1 and 2, the hub 33 includes an inner cylindrical portion 33B for transmitting power to the rotary shaft 16 and serving as an inner portion, a plurality of limiter portions 33C serving as a power cutoff mechanism, or four limiter portions 33C in the present embodiment and an outer ring portion 33D for receiving power from the hub 33. A hole is formed in the inner cylindrical portion 33B, and the front end portion of the rotary shaft 16 is inserted therein. The outer ring portion 33D is formed integrally with the inner cylindrical portion 33B through the limiter portions 33C serving as a power cutoff mechanism. The limiter portions 33C are formed in the hub 33, or the hub 33 includes the limiter portion 33C. The limiter portions 33C is radially disposed between the inner cylindrical portion 33B and the outer ring portion 33D for transmitting power between the inner cylindrical portion 33B and the outer ring portion 33D. The limiter portions 33C are made of a leaf spring, in this preferred embodiment, the hub 33 having the inner cylindrical portion 33B, the limiter portions 33C and the outer ring portion 33D which are integrally formed is made of a sintered metal.

As shown in Fig. 1, an armature 34 is connected by connecting pins 42 to the outer ring portion 33D of the hub 33 for rotation therewith. The hub 33 and the armature 34 are mounted on the rotary shaft 16 of the compressor 10 for rotation therewith and form a second rotating part provided on the side of the rotary shaft 16. An electromagnetic coil 36 is provided in the pulley 31 so that it is positioned on the outer peripheral side of the boss 12B of the front housing 12. The electromagnetic coil 36 is accommodated in a cylindrical coil container 37.

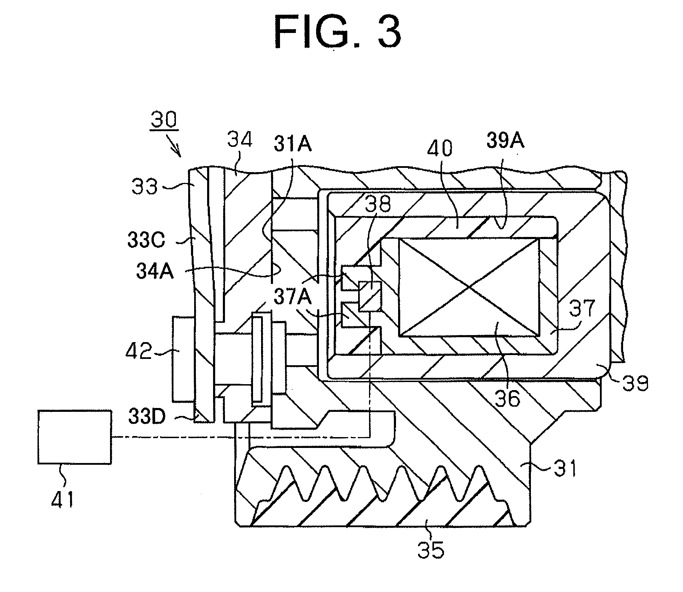

Referring to Fig. 3, the coil container 37 is formed on the front side thereof with a fuse holder 37A for holding a thermal fuse 38. A cylindrical support member 39 having a coil groove 39A formed therein is supported by the front housing 12. The coil container 37 having therein the electromagnetic coil 36 is fitted in the coil groove 39A and fixed thereto by using a resin mold 40. Thus, the thermal fuse 38 is formed integrally with the electromagnetic coil 36.

The fuse holder 37A is located on the side of the coil container 37 that is adjacent to the armature 34. In other words, the thermal fuse 38 is disposed adjacent to the armature 34. The thermal fuse 38 is connected to an electrical circuit between the electromagnetic coil 36 and a battery 41 serving as a power source.

The pulley 31 has a front surface 31A, and the armature 34 has a rear surface 34A, which is normally placed away from the front surface 31 A of the pulley 31. When the electromagnetic coil 36 is energized, the rear surface 34A of the armature 34 is moved against the urging force of limiter portions 33C serving as a leaf spring to be pressed against the front surface 31A of the pulley 31 by electromagnetic attraction, so that the pulley 31 and the armature 34 are connected to each other. In other words, when the electromagnetic coil 36 is energized, the limiter portion 33C is deformed, so that the armature 34 is moved to connect the pulley 33. Thus, power from the vehicle engine E to the pulley 31 through the belt 35 is transmitted to the rotary shaft 16 through the armature 34 and the outer ring portion 33D, the limiter portions 33C and the inner cylindrical portion 33B of the hub 33 in this order. In other words, the electromagnetic coil 36 is energized by electric current supplied from the battery 41 to generate electromagnetic attraction force by which the pulley 31 and the hub 33 are connected to each other for transmitting power between the pulley 31 and the hub 33. Power transmission path is formed between the vehicle engine E and the compressor 10 by the belt 35, the pulley 31, the armature 34, the outer ring portion 33D, the limiter portions 33C and the inner cylindrical portion 33B of the hub 33, and the rotary shaft 16. The limiter portions 33C are disposed in the power transmission path between the vehicle engine E and the compressor 10.

When the energization of the electromagnetic coil 36 is stopped, the electromagnetic attraction force disappears and, therefore, the armature 34 is moved away from the pulley 31 by the urging force of the limiter portions 33C of the hub 33, with the result that the connection between the pulley 31 and the armature 34 is released. Therefore, power is transmitted no more from the vehicle engine E to the compressor 10.

In this preferred embodiment, the power transmission from the vehicle engine E to the rotary shaft 16 is continued while the torque applied at the friction surfaces of the pulley 31 and the armature 34 (or the front surface 31 A of the pulley 31 and the rear surface 34A of the armature 34) is normal or within such a range of magnitude that gives no bad influence on the vehicle engine E.

If any abnormality, such as deadlock, occurs in the compressor 10 while the vehicle engine E is running, the torque applied at the friction surfaces of the pulley 31 and the armature 34 becomes greater than the torque level during the normal power transmission and a limiter breaking torque, at which the limiter portions 33C of the hub 33 are broken. Thus, the hub 33 itself is broken, with the result that the torque transmission from the pulley 31 to the hub 33 is shut off, immediately. The pulley 31 is then rotated free by the power transmitted from the vehicle engine E through the belt 35, but no power is transmitted to the hub 33. The limiter portion 33C of the hub 33 is broken when the limiter portion 33C is subjected to an excessive torque, and used for stopping excessive power transmission from the vehicle engine E to the compressor 10 when the electromagnetic coil 36 is energized. In this preferred embodiment, the limiter breaking torque is set smaller than the torque at which the belt 35 is slipped on the outer surface of the pulley 31.

The magnitude of the torque applied at the friction surfaces of the pulley 31 and the armature 34 varies depending on the energizing condition of the electromagnetic coil 36 by the battery 41 and also the condition of the friction surfaces of the pulley 31 and the armature 34, so that the torque at the friction surfaces becomes smaller than the aforementioned limiter breaking torque. In such a case, the limiter portions 33C may not be broken even in the event of a deadlock of the compressor 10 because the limiter portion 33C is subjected to the torque that is smaller than the limiter breaking torque.

In such a case, the connection between the pulley 31 and the armature 34 is insufficient and the pulley 31 is slipped on the armature 34. Thus, heat is generated at the friction surfaces of the pulley 31 and the armature 34. With an increasing temperature due to such heat, the thermal fuse 38 disposed adjacent to the armature 34 is blown out by the heat transmitted from the friction surfaces and, therefore, the electrical connection between the electromagnetic coil 36 and the battery 41 is broken, so that the energization of the electromagnetic coil 36 by the battery 41 is stopped. Therefore, the connection between the pulley 31 and the armature 34 is released thereby to stop the power transmission from the pulley 31 to the rotary shaft 16.

According to the above preferred embodiment of the present invention, the following advantageous effects may be obtained.
(1) The hub 33 of the electromagnetic clutch 30 has the limiter portions 33C which are broken thereby to release the connection between the pulley 31 and the armature 34 when the torque applied at the friction surfaces of the pulley 31 and the armature 34 exceeds a predetermined value. Thus, the provision of the limiter portions 33C in the electromagnetic clutch 30 having the thermal fuse 38 makes possible rapid disconnection between the pulley 31 and the armature 34 even in the event of a deadlock of the compressor 10. As a result, the belt 35 and the angular bearing 32 may be protected from damages due to the friction and the heat until the thermal fuse 38 is blown out.
(2) The limiter portions 33C are broken when the torque applied at the friction surfaces of the pulley 31 and the armature 34 becomes larger than the limiter breaking torque. Thus, the power transmission from the vehicle engine E to the compressor 10 can be stopped by breaking the limiter portions 33C, reliably.
(3) The electromagnetic clutch 30 has the thermal fuse 38, and the electromagnetic coil 36 is electrically connected to the battery 41 through the thermal fuse 38. When the torque applied at the friction surfaces of the pulley 31 and the armature 34 is smaller than the limiter breaking torque and the pulley 31 is slipped on the armature 34, the thermal fuse 38 is blown out by the heat generated at the friction surfaces of the pulley 31 and the armature 34, thereby releasing the connection between the pulley 31 and the armature 34. Therefore, the belt 35 and the angular bearing 32 may be protected from damages due to the heat generated at the friction surfaces.
(4) The thermal fuse 38 is disposed on the side of the magnetic coil 36 that is adjacent to the armature 34. Thus, the characteristics of the thermal fuse 38 to detect the temperature of the heat generated at the frictional surfaces of the putter 31 and the armature 34 may be improved as compared to the case wherein the thermal fuse 38 is disposed at a position spaced away further from the armature 34.
(5) If any abnormality, such as deadlock, occur in the compressor 10 and the torque applied at the pulley 31 and the armature 34 exceeds the predetermined value, the limiter portions 33C are broken to release the connection between the pulley 31 and the armature 34 rapidly. The pulley 31 is then rotated free and, therefore, no power is transmitted to the hub 33. Thus, the belt 35 is prevented from being damaged by the slippage of the belt 35 on the deadlocked pulley 31. In the case of an auxiliary device of a vehicle such as a supercharger that is driven by a vehicle engine E, failure in transmitting the power to the device due to the damaged belt 35 can be prevented successfully.
(6) The limiter portion 33C is formed integrally with the hub 33, and the hub 33 itself is breakable. Thus, the hub 33 does not need to have a limiter member formed separately from the hub 33, which eliminates the trouble of assembling additional parts and simplifies the structure of the clutch.

The above preferred embodiment may be modified as follows.

In the above preferred embodiment, the limiter portion 33C is formed integrally with the hub 33 as a power cutoff mechanism, and the hub 33 itself is breakable. Alternatively, the hub 33 may have a limiter member formed separately from the hub 33 itself. For example, a pin as a limiter member is inserted through a hole formed in the hub 33 and the pulley 31 in axial direction of the rotary shaft 16 for transmitting power between the hub 33 and the pulley 31. The pulley 31 and the hub 33 are connected to each other through the limiter member for transmitting power between the pulley 31 and the hub 33. When the pin is subjected to an excessive torque, the pin may be broken to release the connection between the hub 33 and the pulley 31.

The preferred embodiment may be modified, for example, in such a way that a pulley is disposed so as to cover the outer peripheral surface of the hub 33. A limiter member formed separately from the hub 33 itself is made of a rubber member. The inner peripheral surface of the pulley 31 and the outer peripheral surface of the hub 33 have a recess. The inner peripheral surface of the pulley 31 is faced to the outer peripheral surface of the hub 33. The rubber member is disposed between the inner peripheral surface of the pulley 31 and the outer peripheral surface of the hub 33 and has a projection for fitting into the recesses of the pulley 31 and the hub 33. The projection of the rubber member is released from the recesses of the pulley 31 or the hub 33 when the rubber member is subjected to an excessive torque. Therefore, power is transmitted between the pulley 31 and the hub 33 through the rubber member. In this case, if the rubber member is subjected to an excessive torque, the pulley 31 and the hub 33 cannot maintain their relative position any more by the elastic force of the rubber member, with the result that the connection between the pulley 31 and the hub 33 is released. Thus, the rubber member performs as a power cutoff mechanism. Unlike the limiter portions 33C of the hub 33, the rubber member as the power cutoff mechanism is not breakable by the overload.

In the above preferred embodiment, the thermal fuse 38 is disposed on the side of the electromagnetic coil 36 that is adjacent to the armature 34. Alternatively, the thermal fuse 38 may be disposed at any position where the heat generated on the friction surfaces of the pulley 31 and the armature 34 may be conducted to the thermal fuse 38.

In the above preferred embodiment, the thermal fuse 38 of the electromagnetic clutch 30 may be omitted.

In the above preferred embodiment, the rotating part on the side of the drive source is not limited to the pulley 31. Alternatively, the rotating part on the side of the drive source may be a sprocket wheel or a gear.

In the preferred embodiment, the present invention is applied to the electromagnetic clutch 30 in the swash plate type variable displacement compressor 10. Alternatively, the present invention may be applied to an electromagnetic clutch used in a rotary type compressor, such as a scroll type compressor.

In the preferred embodiment, the present invention is applied to the electromagnetic clutch 30 used in the compressor 10 serving as an apparatus driven by power from the vehicle engine E. Alternatively, the present invention is applicable to an electromagnetic clutch used in any auxiliary device of vehicle, such as a mechanical supercharger driven by power from the vehicle engine E.

An electromagnetic clutch includes an external drive source, a driven apparatus having a rotary shaft, a power transmission path, first and second rotating parts, a power source, an electromagnetic coil and a power cutoff mechanism. A power transmission path is formed between the external drive source and the driven apparatus, and in which the first and the second rotating parts, the electromagnetic coil and the power cutoff mechanism are disposed. The first rotating part is driven to rotate by power from the external drive source. The second rotating part is mounted on the rotary shaft for rotation therewith. The electromagnetic coil is energized by electric current from the power source to generate electromagnetic attraction force by which the first and the second rotating parts are connected for transmitting power therebetween. The power cutoff mechanism stops excessive power transmission from the external drive source to the driven apparatus when the electromagnetic coil is energized.

## Claims

1. An electromagnetic clutch (30) provided on a power transmission path between an external drive source (E) and a driven apparatus (10), the electromagnetic clutch comprising:
a first rotating part (31) disposed in the power transmission path and driven to rotate by power from the external drive source (E);
a second rotating part (33, 34) disposed in the power transmission path and mounted on a rotary shaft (16) of the driven apparatus (10) for rotation with the rotary shaft (16) of the driven apparatus (10); and
an electromagnetic coil (36) energized by electric current supplied from a power source (41) to generate electromagnetic attraction force by which the first rotating part (31) and the second rotating part (33, 34) are connected to each other for transmitting power between the first rotating part (31) and the second rotating part (33, 34);
**characterized in that** a power cutoff mechanism is disposed in the power transmission path for stopping excessive power transmission from the external drive source (E) to the driven apparatus (10) when the electromagnetic coil (36) is energized.

2. The electromagnetic clutch (30) according to claim 1, **characterized in that** the power cutoff mechanism is broken when the power cutoff mechanism is subjected to an excessive torque.

3. The electromagnetic clutch (30) according to claim 1 or 2, **characterized in that** the second rotating part (33, 34) includes the power cutoff mechanism.

4. The electromagnetic clutch (30) according to any one of claims 1 through 3, **characterized in that** the second rotating part (33, 34) further having a hub (33) including an inner portion (33B) for transmitting power to the rotary shaft (16) and an outer portion (33D) for receiving the power from the first rotating part (31), wherein the power cutoff mechanism is a limiter portion (33C) which is connected between the inner portion (33B) and the outer portion (33D).

5. The electromagnetic clutch (30) according to claim 4, **characterized in that** the limiter portion (33C) is made of a leaf spring, wherein when the electromagnetic coil (36) is energized, the limiter portion (33C) is deformed so that the second rotating part (33, 34) is move to connect the first rotating part (31).

6. The electromagnetic clutch (30) according to claim 4 or 5, **characterized in that** the outer portion is an outer ring portion (33D), wherein the hub (33) includes a plurality of limiter portions (33C) which are radially disposed between the inner portion (33B) and the outer ring portion (33D).

7. The electromagnetic clutch (30) according to any one of claims 1 through 6, further comprising a thermal fuse (38) connected to an electrical circuit between the power source (41) and the electromagnetic coil (36), **characterized in that** the first rotating part (31) and the second rotating part (33, 34) have a friction surface (31A, 34A), **in that** when a temperature of the friction surfaces (31A, 34A) of the first rotating part (31) and the second rotating part (33, 34) is increased, the thermal fuse (38) disconnects the electrical circuit.

8. The electromagnetic clutch (30) according to any one of claims 1 through 6, **characterized in that** the thermal fuse (38) is formed integrally with the electromagnetic coil (36) and disposed adjacent to the friction surfaces (31A, 34A) of the first rotating part (31) and the second rotating part (33, 34).
